# EUROPEAN PATENT APPLICATION

(11) **EP 3 944 369 A1**
(43) Date of publication of application: **26.01.2022**
(21) Application number: 20812926.2
(22) Date of filing: 29.05.2020
(51) Int. Cl.: H01M 4/36, H01M 4/48, H01M 4/485, H01M 4/131, H01M 4/133, H01M 10/052

(54) **ANODE AND SECONDARY BATTERY INCLUDING ANODE**

(30) Priority: 31.05.2019 KR 20190064364
(71) Applicant: LG ENERGY SOLUTION, LTD., Seoul 07335 (KR)
(72) Inventor: BAEK, Joo Yul, Daejeon 34122 (KR); CHOI, Hee Won, Daejeon 34122 (KR); JO, Mi Ru, Daejeon 34122 (KR); HUR, Hyuck, Daejeon 34122 (KR); PARK, Chan Ki, Daejeon 34122 (KR)
(74) Representative: Hoffmann Eitle
(86) International application number: PCT/KR2020/007042
(87) International publication number: WO 2020/242262

(57) **Abstract**

The present invention relates to a negative electrode including a negative electrode active material layer, wherein the negative electrode active material layer includes a negative electrode active material, wherein the negative electrode active material includes SiOₓ(0.5<x<1.8) and Liₐ₁Ti_{b1}O₄(0.8≤a1≤1.4, 1.6≤b1≤2.2), the Liₐ₁Ti_{b1}O₄ has an average particle diameter (D₅₀) of 300 nm to 10 µm, and a/b satisfies 0.4 < a/b < 1.7. Herein, a is an amount in wt% occupied by the SiOₓ in the negative electrode active material layer, and b is an amount in wt% occupied by the Liₐ₁Ti_{b1}O₄ in the negative electrode active material layer.

## Description

### TECHNICAL FIELD

### Cross-reference to Related Applications

This application claims priority from Korean Patent Application No. 10-2019-0064364, filed on May 31, 2019, the disclosure of which is incorporated by reference herein.

### Technical Field

The present invention relates to a negative electrode, which includes SiOₓ(0.5<x<1.8) and Liₐ₁Ti_{b1}O₄(0.8≤a1≤1.4, 1.6≤b1≤2.2) at an appropriate level and has excellent capacity, and a secondary battery including the negative electrode.

### BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity, have been subjected to considerable research and have been commercialized and widely used.

In general, a secondary battery is composed of a positive electrode, a negative electrode, an electrolyte, and a separator. The negative electrode includes a negative electrode active material in which lithium ions from the positive electrode are intercalated and deintercalated, and silicon-based particles, such as SiOₓ(0.5<x<1.8), having high discharge capacity may be used as the negative electrode active material.

However, among lithium transferred from the positive electrode to the negative electrode and intercalated into SiOₓ(0.5<x<1.8) during charge, since a large amount of the lithium may not return to the positive electrode during discharge, there is a limitation in that initial efficiency of the negative electrode including SiOₓ(0.5<x<1.8) is low.

Typically, in order to address this limitation, a kind of "sacrificial positive electrode active material" was used together with a general positive electrode active material. For example, in a case in which LiNiO₂ is used as the sacrificial positive electrode active material, lithium of LiNiO₂ is first used to form a solid electrolyte interphase (SEI) of SiOₓ(0.5<x<1.8) during charge, and, thereafter, lithium supplied from the general positive electrode active material is subjected to an alloying reaction with the SiOₓ(0.5<x<1.8). Through this, it was aimed at overcoming the limitation of the low initial efficiency of the SiOₓ(0.5<x<1.8). However, the above method causes a problem that capacity of the battery is reduced due to a reduction of the positive electrode active material that contributes to the battery capacity.

Thus, there is a need for another method that may overcome the limitation of the low initial efficiency of the SiOₓ(0.5<x<1.8).

### DISCLOSURE OF THE INVENTION

### TECHNICAL PROBLEM

An aspect of the present invention improves initial efficiency and capacity of a battery that uses a negative electrode including SiOₓ(0.5<x<1.8).

### TECHNICAL SOLUTION

According to an aspect of the present invention, there is provided a negative electrode including a negative electrode active material layer, wherein the negative electrode active material layer includes a negative electrode active material, wherein the negative electrode active material includes SiOₓ(0.5<x<1.8) and Liₐ₁Ti_{b1}O₄(0.8≤a1≤1.4, 1.6≤b1≤2.2), the Liₐ₁Ti_{b1}O₄ has an average particle diameter (D₅₀) of 300 nm to 10 µm, and a/b satisfies 0.4 < a/b < 1.7. Herein, a is an amount in wt% occupied by the SiOₓ in the negative electrode active material layer, and b is an amount in wt% occupied by the Liₐ₁Ti_{b1}O₄ in the negative electrode active material layer.

According to another aspect of the present invention, there is provided a secondary battery including the negative electrode.

### ADVANTAGEOUS EFFECTS

According to the present invention, since a negative electrode includes appropriate-sized Liₐ₁Ti_{b1}O₄ at an appropriate level, unnecessary lithium reduction of a positive electrode may be solved while lithium transferred from the positive electrode is consumed in the formation of a solid electrolyte interphase (SEI) of SiOₓ during charge and lithium of the Liₐ₁Ti_{b1}O₄ is transferred to the positive electrode during discharge, and thus, initial efficiency of a battery may be improved. Also, since the lithium supplied from the positive electrode may be intercalated into the delithiated Liₐ₁Ti_{b1}O₄ during charge, capacity of the battery may be improved.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

The expression "D₅₀" in the present specification may be defined as a particle diameter at a cumulative volume of 50% in a particle size distribution curve of particles. The D₅₀, for example, may be measured by using a particle size distribution (PSD) that is derived by a laser diffraction method. The laser diffraction method may generally measure a particle diameter ranging from a submicron level to a few mm and may obtain highly repeatable and high-resolution results.

A negative electrode according to an embodiment of the present invention includes a negative electrode active material layer, wherein the negative electrode active material layer includes a negative electrode active material, wherein the negative electrode active material includes SiOₓ(0.5<x<1.8) and Liₐ₁Ti_{b1}O₄(0.8≤a≤1.4, 1.6≤b1≤2.2), the Liₐ₁Ti_{b1}O₄ has an average particle diameter (D₅₀) of 300 nm to 10 µm, and a/b may satisfy 0.4 < a/b < 1.7. Herein, a is an amount in wt% occupied by the SiOₓ in the negative electrode active material layer, and b is an amount in wt% occupied by the Liₐ₁Ti_{b1}O₄ in the negative electrode active material layer.

The negative electrode may include a negative electrode active material layer.

The negative electrode active material layer may include a negative electrode active material.

The negative electrode active material may include SiOₓ(0.5<x<1.8) and Liₐ₁Ti_{b1}O₄(0.8≤a1≤1.4, 1.6≤b1≤2.2).

Since the SiOₓ has high discharge capacity, it contributes to improving capacity of a battery. x corresponds to a ratio of the number of oxygen (O) atoms to silicon (Si) atoms included in the SiOₓ.

The SiOₓ may have an average particle diameter (D₅₀) of 4 µm to 12 µm, specifically 4.5 µm to 11 µm, and more specifically 5 µm to 10 µm. In a case in which the average particle diameter satisfies the above range, initial efficiency of the battery may be improved, and volume expansion of the battery may be controlled.

The SiOₓ may be included in an amount of 1 wt% to 28 wt%, specifically 3 wt% to 27 wt%, and more specifically 4 wt% to 18 wt% in the negative electrode active material layer. In a case in which the above range is satisfied, the capacity of the battery may be improved while excessive volume expansion of the battery is suppressed.

The Liₐ₁Ti_{b1}O₄(0.8≤a1≤1.4, 1.6≤b1≤2.2) contributes to improving the capacity and initial efficiency of the battery. Specifically, since unnecessary lithium reduction of a positive electrode may be solved while lithium transferred from the positive electrode is consumed in the formation of a solid electrolyte interphase (SEI) of SiOₓ during charge and lithium of the Liₐ₁Ti_{b1}O₄ is transferred to the positive electrode during discharge, the initial efficiency of the battery may be improved. Also, since the lithium supplied from the positive electrode may be intercalated into the delithiated Liₐ₁Ti_{b1}O₄ during charge, the capacity of the battery may be improved.

The Liₐ₁Ti_{b1}O₄ may have an average particle diameter (D₅₀) of 300 nm to 10 µm, specifically 350 nm to 8 µm, and more specifically 400 nm to 5 µm. In a case in which the average particle diameter (D₅₀) of the Liₐ₁Ti_{b1}O₄ is less than 300 nm, since a specific surface area is excessively increased, the Liₐ₁Ti_{b1}O₄ is difficult to be uniformly dispersed in the negative electrode. Accordingly, since the preparation of a uniform electrode may be difficult, a degree of improvement in the initial efficiency and capacity of the battery may be insignificant. Also, in a case in which the average particle diameter (D₅₀) of the Liₐ₁Ti_{b1}O₄ is greater than 10 µm, since energy density of the negative electrode is decreased and a rolling process is difficult, it is not easy to improve rolling density of the negative electrode. The diameter of the Liₐ₁Ti_{b1}O₄ does not corresponds to a size suitable for being coated on a surface of the SiOₓ, but corresponds to a size suitable for being mixed with the SiOₓ during the preparation of the negative electrode.

The Liₐ₁Ti_{b1}O₄ may be included in an amount of 1 wt% to 58 wt%, specifically 3 wt% to 50 wt%, and more specifically 4 wt% to 18 wt% in the negative electrode active material layer. In a case in which the above range is satisfied, since the Liₐ₁Ti_{b1}O₄ may again supply an amount of lithium lost in a positive electrode active material to the positive electrode active material, the initial efficiency and capacity of the battery may be effectively improved.

In the negative electrode active material, a total amount of the SiOₓ and the Liₐ₁Ti_{b1}O₄ may be in a range of 2 wt% to 86 wt%, specifically 4 wt% to 80 wt%, and more specifically 8 wt% to 36 wt%. In a case in which the above range is satisfied, energy density of the battery may be increased.

The negative electrode may satisfy 0.4 < a/b < 1.7, wherein a is an amount in wt% occupied by the SiOₓ in the negative electrode active material layer, and b is an amount in wt% occupied by the Liₐ₁Ti_{b1}O₄ in the negative electrode active material layer. In a case in which a/b is 0.4 or less, the capacity of the battery may be excessively reduced. In contrast, in a case in which a/b is 1.7 or more, a degree of improvement in the initial efficiency of the battery is insignificant. That is, in a case in which the above range is satisfied, both the initial efficiency and the capacity of the battery may be improved to a desired level. Specifically, the negative electrode may satisfy 0.5 < a/b < 1.5, and may more specifically satisfy 0.9 < a/b < 1.1.

The negative electrode active material may further include a carbon-based negative electrode active material. The carbon-based negative electrode active material may contribute to improving the initial efficiency of the negative electrode.

The carbon-based negative electrode active material may include at least one of artificial graphite and natural graphite.

The carbon-based negative electrode active material may have an average particle diameter (D₅₀) of 5 µm to 30 µm, specifically 6 µm to 28 µm, and more specifically 7 µm to 26 µm. In a case in which the above range is satisfied, the energy density and rolling density of the battery may be improved.

The carbon-based negative electrode active material may be included in an amount of 10 wt% to 94 wt%, specifically 15 wt% to 92 wt%, and more specifically 60 wt% to 88 wt% in the negative electrode active material layer. In a case in which the above range is satisfied, life characteristics and capacity of the battery may be more effectively improved.

The negative electrode active material layer may further include a conductive agent. The conductive agent is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon powder; metal powder such as aluminum powder, and nickel powder; conductive whiskers such as zinc oxide whiskers and potassium titanate whiskers; conductive metal oxide such as titanium oxide; or polyphenylene derivatives, may be used.

The negative electrode active material layer may further include a binder. The binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

The negative electrode may further include a current collector. The current collector plays a role in supporting the negative electrode active material layer. That is, the negative electrode active material layer may be disposed on one surface or both surfaces of the current collector. The current collector is not particularly limited so long as it has conductivity without causing adverse chemical changes in the battery. For example, copper, stainless steel, aluminum, nickel, titanium, fired carbon, aluminum or stainless steel that is surface-treated with one of carbon, nickel, titanium, silver, or the like may be used as the current collector. Specifically, a transition metal that absorbs carbon well, such as copper and nickel, may be used as the current collector. The current collector may have a thickness of 6 µm to 20 µm, but the thickness of the current collector is not limited thereto.

A secondary battery according to another embodiment of the present invention may include a negative electrode, a positive electrode, a separator disposed between the positive electrode and the negative electrode, and an electrolyte, wherein the negative electrode is the same as the above-described negative electrode. Since the negative electrode has been described above, detailed descriptions thereof will be omitted.

The positive electrode may include a positive electrode collector and a positive electrode active material layer which is formed on the positive electrode collector and includes the positive electrode active material.

In the positive electrode, the positive electrode collector is not particularly limited as long as it has conductivity without causing adverse chemical changes in the batteries, and, for example, stainless steel, aluminum, nickel, titanium, fired carbon, or aluminum or stainless steel that is surface-treated with one of carbon, nickel, titanium, or silver may be used. Also, the positive electrode collector may typically have a thickness of 3 µm to 500 µm and may have a surface with fine roughness to improve adhesion to the positive electrode active material. The positive electrode collector may be used in various forms, for example, a film, a sheet, a foil, a net, a porous body, a foam body, a non-woven fabric body, and the like.

The positive electrode active material may be a typically used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂); vanadium oxides such as LiV₃O₈, V₂O₅, and Cu₂V₂O₇; nickel (Ni)-site type lithium nickel oxide expressed by a chemical formula of LiNi_{1-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of Li being substituted with alkaline earth metal ions, but the positive electrode active material is not limited thereto. The positive electrode may be Limetal.

The positive electrode active material layer may include a positive electrode conductive agent and a positive electrode binder as well as the above-described positive electrode active material.

In this case, the positive electrode conductive agent is used for providing conductivity to the electrode, wherein any conductive agent may be used without particular limitation as long as it has electronic conductivity without causing adverse chemical changes in the battery. Specific examples of the positive electrode conductive agent may be graphite such as natural graphite and artificial graphite; a carbon-based material such as carbon black, acetylene black, Ketjen black, channel black, furnace black, lamp black, thermal black, and carbon fibers; metal powder, such as copper powder, nickel powder, aluminum powder, and silver powder, or metal fibers; conductive whiskers such as zinc oxide whiskers and potassium titanate whiskers; conductive metal oxide such as titanium oxide; or conductive polymers such as polyphenylene derivatives, and one alone or a mixture of two or more thereof may be used.

Also, the positive electrode binder functions to improve binding between positive electrode active material particles and adhesion between the positive electrode active material and the positive electrode collector. Specific examples of the positive electrode binder may be polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluoro rubber, or various copolymers thereof, and one alone or a mixture of two or more thereof may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydroxy franc, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, ethylene carbonate and propylene carbonate, ring-type carbonates among the carbonate-based organic solvents, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, any one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving life characteristics of the battery, preventing a decrease in battery capacity, and improving discharge capacity of the battery.

According to another embodiment of the present invention, a battery module including the secondary battery as a unit cell and a battery pack including the battery module are provided. Since the battery module and the battery pack include the secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

### Examples and Comparative Examples

### Example 1: Preparation of Battery

### (1) Preparation of Negative Electrode

SiO having an average particle diameter (D₅₀) of 6 µm, Li_{4/3}Ti_{5/3}O₄ having an average particle diameter (D₅₀) of 500 nm, artificial graphite having an average particle diameter (D₅₀) of 15 µm, carbon black as a conductive agent, and carboxymethyl cellulose (CMC) and a styrene butadiene rubber (SBR), as a binder, were added to distilled water and then mixed to prepare a negative electrode slurry (solid content 40 wt%). The negative electrode slurry was coated on a 10 µm thick copper (Cu) metal thin film, as a negative electrode collector, and then dried. In this case, a temperature of circulating air was 130°C. Subsequently, the negative electrode collector coated with the negative electrode slurry was roll-pressed, dried in a vacuum oven at 130°C for 1 hour, and then punched into a rectangle having an area of 15.2 cm² to prepare a negative electrode including a negative electrode active material layer. Amounts of the SiO, the Li_{4/3}Ti_{5/3}O₄, and the artificial graphite in the negative electrode active material layer were 10 wt%, 10 wt%, and 76 wt%, respectively.

### (2) Preparation of Battery

LiNi_{1/3}Mn_{1/3}Co_{1/3}O₂ as a positive electrode active material, acetylene black as a conductive agent, and an SBR, as a binder, were mixed in a weight ratio of 94:3.5:2.5 and then added into N-methyl-2-pyrrolidone (NMP) to prepare a positive electrode active material slurry. The prepared slurry was coated on one surface of a 20 µm thick aluminum foil and dried. In this case, a temperature of circulating air was 130°C. Subsequently, the aluminum foil coated with the slurry was roll-pressed, dried in a vacuum oven at 130°C for 1 hour, and then punched into a rectangle having an area of 15.0 cm² to prepare a positive electrode including a positive electrode active material layer.

After a polyolefin separator was disposed between the positive electrode and the negative electrode, an electrolyte, in which 1 M LiPF₆ was dissolved in a solvent in which ethylene carbonate (EC) and diethyl carbonate (DEC) were mixed in a volume ratio of 30:70, was injected to prepare a lithium secondary battery.

### Example 2: Preparation of Battery

A negative electrode and a secondary battery were prepared in the same manner as in Example 1 except that the SiO, the Li_{4/3}Ti_{5/3}O₄, and the artificial graphite were included in the negative electrode active material layer in amounts of 11 wt%, 9 wt%, and 76 wt%, respectively.

### Example 3: Preparation of Battery

A negative electrode and a secondary battery were prepared in the same manner as in Example 1 except that the SiO, the Li_{4/3}Ti_{5/3}O₄, and the artificial graphite were included in the negative electrode active material layer in amounts of 9 wt%, 11 wt%, and 76 wt%, respectively.

### Comparative Example 1: Preparation of Battery

A negative electrode and a secondary battery were prepared in the same manner as in Example 1 except that the average particle diameter (D₅₀) of the Li_{4/3}Ti_{5/3}O₄ was 100 nm.

### Comparative Example 2: Preparation of Battery

A negative electrode and a secondary battery were prepared in the same manner as in Example 1 except that the SiO, the Li_{4/3}Ti_{5/3}O₄, and the artificial graphite were included in the negative electrode active material layer in amounts of 5 wt%, 15 wt%, and 76 wt%, respectively.

### Comparative Example 3: Preparation of Battery

A negative electrode and a secondary battery were prepared in the same manner as in Example 1 except that the SiO, the Li_{4/3}Ti_{5/3}O₄, and the artificial graphite were included in the negative electrode active material layer in amounts of 13 wt%, 7 wt%, and 76 wt%, respectively.

**[Table 1]**

| | SiO content (wt%) | Li_{4/3}Ti_{5/3}O₄ content (wt%) | Average particle diameter (D₅₀) of Li_{4/3}Ti_{5/3}O₄ (nm) | a/b |
|---|---|---|---|---|
| Example 1 | 10 | 10 | 500 | 1.00 |
| Example 2 | 11 | 9 | 500 | 1.22 |
| Example 3 | 9 | 11 | 500 | 0.82 |
| Comparative Example 1 | 10 | 10 | 100 | 1. 00 |
| Comparative Example 2 | 5 | 15 | 500 | 0.33 |
| Comparative Example 3 | 13 | 7 | 300 | 1.86 |

a is an amount in wt% occupied by the SiO in the negative electrode active material layer, and b is an amount in wt% occupied by the Li_{4/3}Ti_{5/3}O₄ in the negative electrode active material layer.

### Experimental Example 1: Discharge Capacity and Initial Efficiency Evaluation

The batteries of Examples 1 to 3 and Comparative Examples 1 to 3 were charged and discharged to evaluate discharge capacity and initial efficiency.

Specifically, each of the lithium secondary batteries with a battery capacity of 50 mAh prepared in Examples 1 to 3 and Comparative Examples 1 to 3 was charged at 2.5 V and a constant current of 0.33 C until the voltage reached 4.25 V, and subsequently charged at a constant voltage of 4.25 V, and the charge was terminated when a charging current reached 2.5 mA. Thereafter, after the lithium secondary batteries were left standing for 30 minutes, the lithium secondary batteries were discharged at a constant current of 0.33 C to 2.5 V. Discharge capacities in this case were indicated as discharge capacities in Table 2, and the discharge capacities were calculated by setting the capacity of Example 1 as 100%. Initial efficiency is a value expressed as a percentage of discharge capacity relative to charge capacity during initial charge, wherein the initial efficiencies were also calculated by setting the efficiency of Example 1 as 100%.

**[Table 2]**

| Battery | Discharge capacity (mAh/g) | Initial efficiency (%) |
|---|---|---|
| Example 1 | 100.0 | 100.0 |
| Example 2 | 104.0 | 99.7 |
| Example 3 | 98.0 | 100.3 |
| Comparative Example 1 | 81.5 | 85.2 |
| Comparative Example 2 | 86.0 | 100.6 |
| Comparative Example 3 | 101.8 | 92.1 |

According to Table 2, with respect to the negative electrodes of the examples in which SiO and appropriate-sized Li_{4/3}Ti_{5/3}O₄ were used, it may be understood that capacities and initial efficiencies of the batteries were all high. With respect to Comparative Example 1 in which small-sized Li_{4/3}Ti_{5/3}O₄ was used, both capacity and initial efficiency of the battery were low. Also, with respect to Comparative Examples 2 and 3 in which a/b, as a weight ratio of SiO to Li_{4/3}Ti_{5/3}O₄, did not satisfy 0.4 < a/b < 1.7, it may be understood that capacity or initial efficiency of the batteries was excessively low.

## Claims

1. A negative electrode, comprising:
a negative electrode active material layer,
wherein the negative electrode active material layer comprises a negative electrode active material,
wherein the negative electrode active material comprises SiOₓ, wherein 0.5<x<1.8 and Liₐ₁Ti_{b1}O₄, wherein 0.8≤a1≤1.4, 1.6≤b1≤2.2,
wherein the Liₐ₁Ti_{b1}O₄ has an average particle diameter (D₅₀) of 300 nm to 10 µm, and
wherein a/b satisfies 0.4 < a/b < 1.7,
wherein, a is an amount in wt% occupied by the SiOₓ in the negative electrode active material layer, and
b is an amount in wt% occupied by the Liₐ₁Ti_{b1}O₄ in the negative electrode active material layer.

2. The negative electrode of claim 1, wherein a/b satisfies 0.9 < a/b < 1.1.

3. The negative electrode of claim 1, wherein the SiOₓ has an average particle diameter (D₅₀) of 4 µm to 12 µm.

4. The negative electrode of claim 1, wherein the SiOₓ is included in an amount of 1 wt% to 28 wt% in the negative electrode active material layer.

5. The negative electrode of claim 1, wherein the Liₐ₁Ti_{b1}O₄ is included in an amount of 1 wt% to 58 wt% in the negative electrode active material layer.

6. The negative electrode of claim 1, wherein, in the negative electrode active material, a total amount of the SiOₓ and the Liₐ₁Ti_{b1}O₄ is in a range of 2 wt% to 86 wt%.

7. The negative electrode of claim 1, wherein the negative electrode active material further comprises a carbon-based negative electrode active material.

8. The negative electrode of claim 7, wherein the carbon-based negative electrode active material is included in an amount of 10 wt% to 94 wt% in the negative electrode active material layer.

9. The negative electrode of claim 7, wherein the carbon-based negative electrode active material has an average particle diameter (D₅₀) of 5 µm to 30 µm.

10. A secondary battery comprising:
the negative electrode of claim 1;
a positive electrode;
a separator disposed between the positive electrode and the negative electrode; and an electrolyte.
